# EUROPÄISCHE PATENTANMELDUNG

(11) **EP 1 247 699 A2**
(43) Veröffentlichungstag der Anmeldung: **09.10.2002**
(21) Anmeldenummer: 02006969.6
(22) Anmeldetag: 27.03.2002
(51) Int. Cl.: B60R 21/01

(54) **Verfahren zur Auslösung eines Insassenschutzsystems in Fahrzeugen**

(30) Priorität: 06.04.2001 DE 10117220
(71) Anmelder: Conti Temic Microelectronic GmbH, 90411 Nürnberg (DE)
(72) Erfinder: Fendt, Günter, 86529 Schrobenhausen (DE)
(74) Vertreter: Kolb, Georg

(57) **Zusammenfassung**

**2.1.** Bekannte Auslöseverfahren weisen den Nachteil auf, dass die zur Veränderung der Auslöseschwelle notwendigen Informationen beim Aufprall abgefragt werden. Dabei besteht das Risiko, dass die Systeme, die die benötigten Daten oder Signale liefern sollen, oder das Übertragungsmedium, zum Beispiel der Kabelbaum, durch den Aufprall gestört oder sogar zerstört sind. Ebenfalls kann das für den Datenbus notwendige Übertragungsprotokoll auf Grund von Spannungsspitzen oder Kurzschlüssen infolge eines Aufpralls gestört sein und fehlerhafte Werte liefern.
**2.2.** Verfahren zur Auslösung eines Insassenschutzsystems in Fahrzeugen, bei welchem ein von Sensoren ausgehendes Freigabesignal für die Auslösung des Insassenschutzsystems generiert und mit einem als Auslösekriterium benutzten Schwellwert verglichen wird, dadurch gekennzeichnet, dass der Schwellwert fortlaufend und in Abhängigkeit von der gemessenen Fahrzeuggeschwindigkeit oder in Abhängigkeit von Sensorsignalen verändert bzw. angepasst wird.
**2.3.** Die Erfindung eignet sich insbesondere für einen Algorithmus zur Auslösung eines Insassenschutzsystems in Fahrzeugen, um Fehlauslösungen bei hohen Geschwindigkeiten zu verhindern.

## Beschreibung

Die Erfindung betrifft ein Verfahren zur Auslösung von Insassenschutzsystemen in Fahrzeugen nach dem Oberbegriff der Patentansprüche 1 und 4.

Ein solches Verfahren nach dem Stand der Technik ist beispielsweise aus der neuen europäischen Patentschrift EP 0 458 796 B2 bekannt, wo beschrieben wird, dass ein als Auslösekriterium benutzter Schwellwert in Abhängigkeit von einer oder mehreren vom Crashvorgang abgeleiteten Zustandsgrößen des Fahrzeugs veränderbar ist. Um eine Gefährdung der Fahrzeuginsassen durch eine Fehlauslösungen des Insassenschutzsystems auszuschließen, wird im Falle eines Aufpralls beispielsweise die Auslöseschwelle angehoben.

Weiterhin ist zum Beispiel aus der deutschen Offenlegungsschrift DE 41 17 811 A1 bekannt, die Geschwindigkeit durch Integration aus der Beschleunigung zu erzeugen und die Auslöseschwelle bei niedriger Geschwindigkeit anzuheben und bei hoher Geschwindigkeit abzusenken.

Bei derartigen Verfahren besteht das Risiko, dass die Systeme, die die benötigten Daten oder Signale zur Anpassung der Auslöseschwelle liefern sollen, oder das Übertragungsmedium, zum Beispiel der Kabelbaum, durch den Crashvorgang gestört oder sogar zerstört sind. Ebenfalls kann das für den Datenbus notwendige Übertragungsprotokoll auf Grund von Spannungsspitzen oder Kurzschlüssen infolge eines Aufpralls fehlerhafte Werte liefern.

Zudem ist noch aus der deutschen Offenlegungsschrift DE 37 37 554 A1 bekannt, die Informationen, die in einem Anti-Blockiersystem vorliegen, über dessen Prozessor zur Auslösung der Insassenschutzsysteme heran zu ziehen.

Der Erfindung liegt die Aufgabe zugrunde, ein Verfahren zur Auslösung eines Insassenschutzsystems in Fahrzeugen nach dem Oberbegriff des Anspruchs 1 oder 4 so zu gestalten, dass eine die Fahrzeuginsassen gefährdende Fehlauslösung zuverlässig vermieden wird und dennoch im Crashfall eine sichere Auslösung gewährleistet ist.

Gelöst wird diese Aufgabe durch ein Verfahren mit den in den Ansprüchen 1 oder 4 angegebenen Merkmalen.

Das Verfahren nach Anspruch 1 oder 4 weist die Vorteile auf, dass die zur Anpassung der Auslöseschwelle notwendigen Informationen sicher erfasst und übertragen werden können, da Sensoren, Übertragungswege und Auswerteelektronik voll funktionsfähig sind. Ein weiterer Vorteil liegt darin, dass der Prozessor, der den Auslösealgorithmus bearbeitet, diese zusätzlichen Informationen nicht erst bei einem Crash mitverarbeiten muss, sondern bereits zu einem früheren Zeitpunkt mit noch nicht zeitkritischen Abläufen bearbeiten kann. Somit muss im Crashfall eine Auslöseschwelle auf Basis der zusätzlichen Informationen nicht erst berechnet werden, sondern man kann auf eine zuvor der Situation angepasste Einstellung zurückgreifen.

Die Erfindung eignet sich insbesondere für einen Algorithmus zur Auslösung eines Insassenschutzsystems in Fahrzeugen, um Fehlauslösungen bei hohen Geschwindigkeiten zu verhindern.

Vorteilhafte Ausgestaltungen des Verfahrens nach Anspruch 1 oder 4 sind in den jeweiligen Unteransprüchen angegeben.

Die Erfindung wird nun anhand eines Ausführungsbeispiels unter Zuhilfenahme der Zeichnung erläutert.

Es zeigen
- Fig. 1a - c:: jeweils in einem Diagramm den Zusammenhang zwischen einer Geschwindigkeitsänderung und der Anpassung der Auslöseschwelle und
- Fig. 2:: in einem Diagramm den Zusammenhang zwischen einem weiteren Ereignis und der Anpassung der Auslöseschwelle.

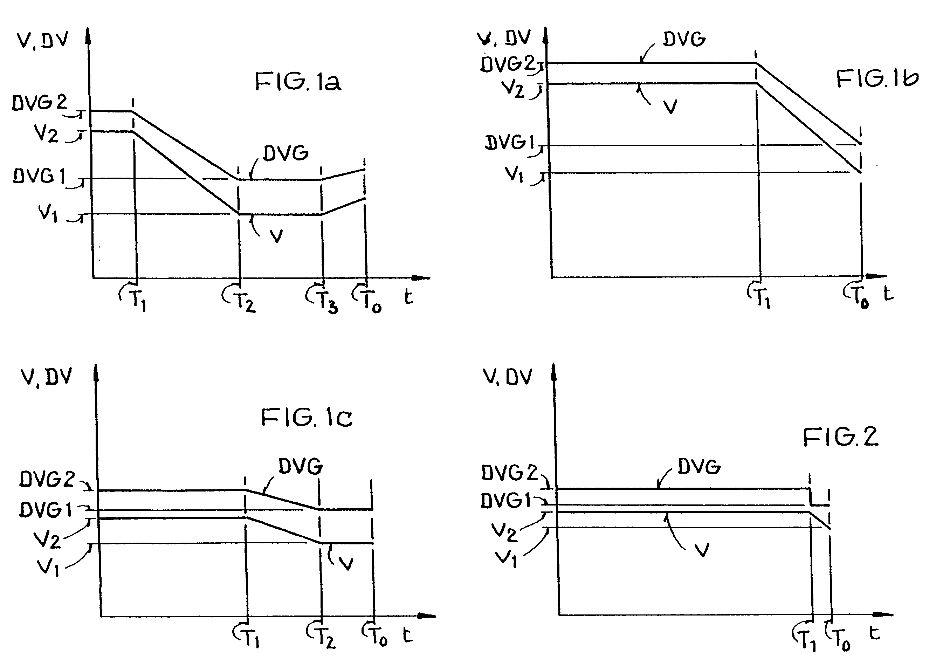

Die **Fig. 1a-c** zeigen jeweils in einem Diagramm die Geschwindigkeit V eines Fahrzeugs und die Geschwindigkeitsänderung DV über der Zeit t, weiterhin eine erste Kurve **V**, die die Geschwindigkeit eines Fahrzeugs darstellt, und eine zweite Kurve **DVG,** die die als Auslösekriterium benutzen Grundschwelle (G) für die Geschwindigkeitsänderung (DV) darstellt.

In **Fig. 1a** weist ein Fahrzeug bis zu einem Zeitpunkt **T**_{**1**} eine annähernd konstante und vergleichsweise hohe Geschwindigkeit **V**_{**2**} auf. Die Grundschwelle der Geschwindigkeitsänderung **DVG** ist auf einen vergleichsweise hohen Wert **DVG2** eingestellt, um ein unbeabsichtigtes Auslösen des Insassenschutzsystems, etwa beim starken Abbremsen des Fahrzeugs, zu verhindern. Die zugehörige Kurve **DVG** verläuft parallel zur Kurve der Geschwindigkeit **V**_{**2**} und ebenfalls bis zum Zeitpunkt **T**_{**1**} annähernd konstant.

Vom Zeitpunkt **T**_{**1**} an bis zu einem Zeitpunkt **T**_{**2**} wird die Geschwindigkeit **V** des Fahrzeugs gleichmäßig vom Wert **V**_{**2**} auf einen vergleichsweise niedrigen Wert **V**_{**1**} verringert, beispielsweise aufgrund einer Geschwindigkeitsbegrenzung. Analog zur Geschwindigkeit **V** wird erfindungsgemäß die DV-Grundschwelle **DVG** ausgehend vom Wert **DVG2** zum Zeitpunkt **T**_{**1**} auf einen vergleichsweise niedrigen Wert **DVG1** zum Zeitpunkt **T**_{**2**} zurück genommen, um eine schnelle Auslösebereitschaft des Insassenschutzsystems zu gewährleisten.

Ab dem Zeitpunkt **T**_{**2**} bis zu einem Zeitpunkt **T**_{**3**} wird vom Fahrzeug die Geschwindigkeit **V**_{**1**} annähernd konstant beibehalten; analog dazu wird in diesem Zeitraum die DV-Grundschwelle **DVG** auf dem Wert **DVG1** annähernd konstant gehalten. Zum Zeitpunkt **T**_{**3**} erhöht sich die Geschwindigkeit **V** des Fahrzeugs ausgehend vom Wert **V**_{**1**} wieder auf einen höheren Wert bis zu einem Zeitpunkt **T**_{**0**}**.** Erfindungsgemäß wird mit der zunehmenden Geschwindigkeit in diesem Zeitraum zwischen **T**_{**3**} und **T**_{**0**} auch die DV-Grundschwelle **DVG** wieder auf einen höheren Wert angehoben.

Sollte zum Zeitpunkt **T**_{**0**} ein Crashvorgang, beispielsweise ein Aufprall stattfinden und ein von Sensoren, zum Beispiel von Aufprallsensoren, ausgehendes Freigabesignal für die Auslösung des Insassenschutzsystems generiert, so kann vorteilhaft auf eine vor dem Zeitpunkt **T**_{**0**} angepasste Einstellung der Auslöseschwelle zurück gegriffen werden, oder die Auslöseschwelle gemäß des Stands der Technik in Abhängigkeit von einer oder mehreren vom Crashvorgang abgeleiteten Zustandsgrößen des Fahrzeugs verändert werden.

Die Anpassung der DV-Grundschwelle **DVG** in Abhängigkeit der Geschwindigkeit **V** des Fahrzeugs erfolgt auch bei noch höheren Geschwindigkeiten, wie dies in **Fig. 1b** dargestellt ist, oder auch bei wesentlich niedrigeren Geschwindigkeiten, wie **Fig. 1c** zeigt.

In **Fig. 2** ist dargestellt, wie auch andere Ereignisse, insbesondere Sensorsignale, zu einer Anpassung der Auslöseschwelle **DVG** führen können. Beispielsweise ist ein Fahrzeug bis zu einem Zeitpunkt **T**_{**1**} mit einer Geschwindigkeit **V**_{**2**} unterwegs; die DV-Grundschwelle **DVG** ist bis zu diesem Zeitpunkt **T**_{**1**} auf einen vergleichsweise hohen Wert **DVG2** eingestellt, um ein unbeabsichtigtes Auslösen des Insassenschutzsystems und damit eine Gefährdung der Fahrzeuginsassen zu verhindern.

Zum Zeitpunkt **T**_{**1**} tritt ein relevantes Ereignis ein, beispielsweise erfolgt eine Vollbremsung des Fahrzeugs. In Folge dessen verringert sich die Geschwindigkeit **V,** ausgehend von der Geschwindigkeit **V**_{**2**} auf eine niedrigere Geschwindigkeit **V**_{**2**} zum Zeitpunkt **T**_{**0**}**.** Vom Antiblockier-Steuergerät kann nun bereits zum Zeitpunkt **T**_{**1**} die Information "Vollbremsung" erhalten und dahingehend ausgewertet werden, dass folglich die DV-Grundschwelle **DVG** auf einen niedrigeren Wert **DVG1** eingestellt wird, noch bevor sich die Geschwindigkeit **V** allzusehr verringert hat. Das schnelle Absenken der DV-Grundschwelle **DVG** garantiert die schnelle Auslösung des Insassenschutzsystems, falls zum Zeitpunkt **T**_{**0**} ein Crashvorgang, beispielsweise ein Aufprall auf ein Hindernis, erfolgen sollte und ein von Sensoren ausgehendes Freigabesignal für die Auslösung des Insassenschutzsystems generiert wird.

Anstelle der vom Antiblockier-Steuergerät kommenden Informationen oder zusätzlich dazu können auch Informationen aus einem Abstandserfassungssystem oder aus einer aktiven Fahrwerksregelung abgefragt und zur Anpasung der Auslöseschwelle verwendet werden.

Die erfindungsgemäße Anpassung der als Auslösekriterium benutzten DV-Grundschwelle **DVG** an die gemessene Geschwindigkeit **V** eignet sich insbesondere für einen Algorithmus zur Auslösung eines Insassenschutzsystems in Fahrzeugen, um Fehlauslösungen bei hohen Geschwindigkeiten beispielsweise in Folge einer Vollbremsung zu verhindern.

## Patentansprüche

1. Verfahren zur Auslösung eines Insassenschutzsystems in Fahrzeugen, bei welchem ein von Sensoren ausgehendes Freigabesignal für die Auslösung des Insassenschutzsystems generiert und mit einem als Auslösekriterium benutzten Schwellwert (DVG) verglichen wird, **dadurch gekennzeichnet, dass** der Schwellwert (DVG) fortlaufend und in Abhängigkeit von der gemessenen Fahrzeuggeschwindigkeit (V) verändert bzw. angepasst wird.

2. Verfahren nach Anspruch 1, **dadurch gekennzeichnet, dass** der Schwellwert (DVG) bei steigender Geschwindigkeit (V) des Fahrzeugs erhöht wird.

3. Verfahren nach Anspruch 1, **dadurch gekennzeichnet, dass** der Schwellwert (DVG) bei fallender Geschwindigkeit (V) des Fahrzeugs vermindert wird.

4. Verfahren zur Auslösung eines Insassenschutzsystems in Fahrzeugen, bei welchem ein von Sensoren ausgehendes Freigabesignal für die Auslösung des Insassenschutzsystems generiert und mit einem als Auslösekriterium benutzten Schwellwert (DVG) verglichen wird, **dadurch gekennzeichnet, dass** der Schwellwert (DVG) fortlaufend und in Abhängigkeit von Sensorsignalen verändert bzw. angepasst wird.

5. Verfahren nach Anspruch 4, **dadurch gekennzeichnet, dass** der Schwellwert (DVG) beim Einsetzen eines Antiblockier-Systems vermindert wird.
